# EUROPEAN PATENT SPECIFICATION

(11) **EP 1 492 843 B1**
(45) Date of publication and mention of the grant of the patent: **21.06.2006**
(21) Application number: 03723501.7
(22) Date of filing: 07.04.2003
(51) Int. Cl.: C08L 23/04, C08L 23/16

(54) **POLYMER COMPOSITION WITH IMPROVED TEMPERATURE RESISTANCE**
POLYMERZUSAMMENSETZUNG MIT VERBESSERTER TEMPERATURBESTÄNDIGKEIT
COMPOSITION POLYMERE PRESENTANT UNE MEILLEURE RESISTANCE THERMIQUE

(30) Priority: 11.04.2002 NL 1020366
(43) Date of publication of application: 05.01.2005
(73) Proprietor: DSM IP Assets B.V., 6411 TE Heerlen (NL)
(72) Inventor: BRULS, Wilhelmus, Gerardus, Marie, NL-6243 BE Geulle (NL); REPIN, Johannes, Fredericus, NL-6441 KX Brunssum (NL); WIDDERSHOVEN, Christian, NL-6102 GB Echt (NL)
(74) Representative: Krijgsman, Willem
(86) International application number: PCT/NL2003/000259
(87) International publication number: WO 2003/087216

(56) References cited:
- EP-A- 0 866 081
- WO-A-00/77078
- US-A- 6 117 561

## Description

The invention relates to a polymer composition, comprising as main components:
- a polyolefin polymer grafted with an ethylenically unsaturated functionalised compound with at least a first functional group;
- a reactive thermoplastic polymer with a second functional group which can react with the first functional group; and
- a base polymer.

Such a composition is known from WO-97/12919 as a mixture of the reaction product of the polyolefin polymer grafted with an ethylenically unsaturated functionalised compound and the reactive thermoplastic polymer with for example polypropylene as base polymer. The reaction product appears to have an improved temperature resistance, expressed in the 'Deflection temperature under load' according to ASTM standard D 648-82 at 66 psi, relative to the polyolefin polymer, and is applied as an impact modifier of the base polymer.

Objects, in particular layers, manufactured from the mixture obtained, when exposed to a temperature above the melting point of the base polymer appear to be subject to serious deformation and also to change in terms of appearance in an unfavourable sense.

The object of the invention is to provide a composition such as described in the opening lines hereof, which even upon exposure to temperatures above the melting point of the base polymer retain their shape and favourable appearance better.

This object is attained according to the invention in that the base polymer comprises at least 55 wt% of a single site catalyst polymerised polyolefin and in that the proportion of the base polymer amounts to more than 50 wt%, preferably to at least 55wt% and the proportion of the reactive thermoplastic polymer to at least 10 wt% of the total of the main components, in that the proportion of the reactive thermoplastic polymer amounts to at least 50 wt% of the total of the reactive thermoplastic polymer and the polyolefin polymer grafted with an ethylenically unsaturated functionalised compound and in that the quantity of the ethylenically unsaturated functionalised compound in the grafted polyolefin polymer is between 0.05 and 1.0 mgeq/g.

An object manufactured from the composition according to the invention appears upon exposure to a temperature above the melting point of the base polymer to retain its shape and favourable appearance longer than an object manufactured from the known composition. This is in particular the case when the melting point or the glass transition temperature of the reactive polymer is higher than that of the base polymer.

The polymer composition according to the invention contains a polyolefin polymer grafted with an ethylenically unsaturated functionalised compound, in the following referred to as 'grafted polyolefin polymer'.

As polyolefin polymers in the composition according to the invention are suitable homo-and copolymers of one or more olefin monomers that that can be grafted with an ethylenically unsaturated functionalised compound. Examples of suitable polyolefin polymers are ethylene polymers, propylene polymers and styrenebutadiene-styrene block copolymers or the hydrogenated form hereof. Examples of suitable ethylene polymers are all thermoplastic homopolymers of ethylene and copolymers of ethylene with as comonomer one or more a-olefins with 3-10 C-atoms, in particular propylene, isobutene, 1-butene, 1-hexene, 4-methyl-1-pentene and 1-octene which can be manufactured with the known catalysts such as for example Ziegler-Natta, Phillips and metallocene catalysts. The quantity of comonomer lies as a rule between 0 and 50 wt. %, and preferably between 5 and 35 wt. %. Such polyethylenes are for instance known as high-density polyethylene (HDPE), low-density polyethylene (LDPE), linear low-density polyethylene (LLDPE) and linear very low density polyethylene (VL(L)DPE). Suitable polyethylenes have a density between 860 and 970 kg/m³ . Examples of suitable propylene polymers are homopolymers of propylene and copolymers of propylene with ethylene, in which the proportion of ethylene amounts to at most 30 wt% and preferably at most 25 wt%. Their Melt Flow Index (230°C, 2,16 kg) lies between 0.5 and 25 g/10min, more preferably between 1.0 and 10 g/10min.

Suitable ethylenically unsaturated functionalised compounds are those that can be grafted on at least one of the above-mentioned suitable polyolefin polymers. These compounds contain a carbon-carbon double bond and can form a side branch on a polyolefin polymer by grafting thereon. The compounds have been functionalised, which means that they possess a first functional group. Examples of functional groups are carboxylic acids and esters, anhydrides and salts thereof. The functionalised compounds can also contain an epoxy ring, an amine group, an alkoxy silane group or an alcohol group. The compound can also be an ethylenically unsaturated oxazoline.

Examples of suitable ethylenically unsaturated functionalised compounds are the unsaturated carboxylic acids and esters and anhydrides and metallic or non-metallic salts thereof. Preferably the ethylenic unsaturation in the compound has been conjugated with a carbonyl group. Examples thereof are acrylic, methacrylic, maleic, fumaric, itaconic, crotonic, methyl crotonic, and cinnamic acid and esters, anhydrides and possible salts thereof. Of the compounds with at least one carbonyl group maleic anhydride is preferable.

Examples of suitable ethylenically unsaturated functionalised compounds with at least one epoxy ring are for example glycidyl esters of unsaturated carboxylic acids, glycidyl ethers of unsaturated alcohols and of alkyl phenols and vinyl and allyl esters of epoxy carboxylic acids. Glycidyl methacrylate is specially suitable.

Examples of suitable ethylenically unsaturated functionalised compounds with at least one amine functionality are amine compounds with at least one ethylenically unsaturated group, for example allylamine, propenyl, butenyl, pentenyl and hexenyl amine, amine ethers, for example isopropenylphenyl ethylamine ether. The amine group and the unsaturation should be situated relative to each other in such a position that they do not influence the grafting reaction to an undesirable degree. The amines can be unsubstituted but also substituted with for example alkyl and aryl groups, halogen, ether and thioether groups.

Examples of suitable ethylenically unsaturated functionalised compounds with at least one alcohol functionality are all compounds with a hydroxyl group whether or not etherified or esterified and an ethylenically unsaturated compound, for example allyl and vinyl ethers of alcohols such as ethyl alcohol and higher branched and unbranched alkyl alcohols, a well as allyl and vinyl esters of alcohol-substituted acids, preferably carboxylic acids and C₃-C₃-C₈ alkenyl alcohols. The alcohols can further be substituted with for example alkyl and aryl groups, halogen, ether and thioether groups which do not influence the grafting reaction to an undesirable degree.

Examples of oxazoline compounds that are suitable as ethylenically unsaturated functionalised compounds in the framework of the invention are for example those with the following general formula 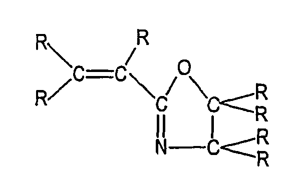 wherein each R independently of the other hydrogen, is a halogen, a C₁-C₁₀ alkyl radical or a C₆-C₁₄ aryl radical.

The quantity of the ethylenically unsaturated functionalised compound in the grafted polyolefin polymer lies between 0.05 and 1 mgeq per gram polyolefin polymer. It was found that with quantities above the indicated upper limit the compatibilising effect of the grafted polyolefin polymer decreases and that with quantities below the lower limit the intended effect of the reactive polymer decreases. Said quantities correspond to an average molecule part between two grafting sites which is equivalent to a molecular weight situated between 1000 and 20000. Preferably the quantity of the ethylenically unsaturated functionalised compound in the grafted polyolefin polymer lies between 0.1 and 0.5 mgeq per gram polyolefin polymer and more preferably between 0.15 and 0.3 mgeq per gram polyolefin polymer. The grafted polyolefin polymer can be prepared by reacting the polyolefin polymer with the ethylenically unsaturated functionalised compound according to methods known per se for this purpose, for example as described in US patent 3,236,917, US patent 5,194,509 and US patent 4,950,541.

The composition according to the invention further contains a reactive thermoplastic polymer, hereafter also referred to as reactive polymer. Suitable reactive thermoplastic polymers are semi-crystalline or amorphous polymers that contain a second functional group which can react in the melt with the first functional group of the ethylenically unsaturated functionalised compound that has been grafted on the polyolefin polymer. The melting point or the glass transition point, respectively, of the semi-crystalline or the amorphous polymers preferably lies above 120°C or above 100°C, respectively, and more preferably above 150°C or above 120°C, respectively. Suitable second functional groups are for example hydroxy, phenolic, (carboxylic) acid (anhydride), amine, epoxy and isocyanate groups. Examples of suitable reactive thermoplastic polymers are polybutylene terephthalate (PBT), polyethylene terephthalate (PET), amine-functionalised polymers including semi-crystalline polyamides, for example polyamide-6, polyamide-66, polyamide-46 and amorphous polyamides, for example polyamide-6I or polyamide-6T, polysulfon, polycarbonate, epoxy-functionalised polymethyl acrylate, styrene-acrylonitrile functionalised with epoxy or other functional groups as mentioned above. Suitable reactive polymers are those with the common intrinsic viscosities and molecular weights. For polyesters the intrinsic viscosity lies for example between 1.8 and 2.5 dl/g, measured in m-cresol at 25°C. For polyamides the molecular weight lies for example between 10000 and 50000 and preferably between 15000 and 30000.

Polyamides are very suitable due to their availability across a wide range of melting points. Also, the reaction of their second reactive group with for example the MZA-grafted polymers advantageously applied as graft polymer is irreversible under the circumstances under which the compositions are as a rule applied.

The first and the second functional group of the functionalised ethylenically unsaturated compound or of the reactive polymer, respectively, are chosen in such a way that both functionalities can react mutually so that the reactive polymer and the ethylenically unsaturated compound can bind with each other.

The proportion of the reactive polymer in the total of the reactive polymer and the grafted polyolefin polymer amounts to at least 50 wt% and more preferably at least 60 and preferably at most 95 wt% and more preferably at most 85 wt%. The two functionalised components in the composition according to the invention occur therein in whole or in part in the form of the compound formed through the mutual reaction of the respective functional groups. The specified quantities of these components always relate to the quantities reduced to unreacted starting components. The composition can also be defined as being formed from the three main components.

The polymer composition according to the invention contains a base polymer, comprising at least 55 wt% of a single site catalyst polymerised polyolefin. Examples of single site catalysts are metallocene catalysts. The polyolefins preferably as their main component comprise ethylene or propylene. Polyolefins that in particular benefit from the advantages of the present invention are copolymers of ethylene with for example 1-butene, 1-hexene or 1-octene, manufactured with a metallocene catalyst, referred to herein as 'plastomers'. A composition in which plastomers such as polyolefin polymers occur appear to possess both a good resistance to exposure to temperatures above the melting point of the base polymer and a high flexibility even at lower temperatures. Preferably the plastomer has a density of at most 910 kg/m³, more preferably of at most 890 kg/m³ and most preferably at most 885 kg/m³ . The single site catalyst polymerised polyolefin should form a continuous matrix phase in the base polymer. In addition to the single site catalyst polymerised polyolefins the base polymer may comprise other polymers, in particular polyolefins. These polyolefins can be polymerised with conventional polymerisation techniques with Ziegler-Natta or Phillips type catalysts. Furthermore the base polymer may comprise polystyrene, acryl-butadiene-styrene, ethylene vinyl alcohol, polyvinyl alcohol, polyvinylchloride, polyurethane, polycarbonate and SEBS, SBR and EP(D)M rubbers. The total amount of other polymers than the single site catalysed polyolefins in the base polymer may range from 0 to 45 wt.%. Mixtures of the reaction product and mutually compatible base polymers can also be applied. Preferably besides the single site catalyst polymerised polyolefins at least polyethylene is comprised in the base polymer.

In order to ensure that the properties of the base polymer are present to a sufficient degree in the composition the base polymer should form a continuous phase in the composition. The proportion of the base polymer therefore is at least 50 wt%, preferably 55 wt% and more preferably at least 70%. The proportion of the two other main components then amounts to at most 45 or 30 wt%.

The proportion of the reactive polymer amounts to at least 10 wt% of the total of the main components. Lower quantities appear to contribute only in small measure to the improvement of the resistance to exposure to elevated temperatures. The achievable improvement of the resistance to exposure to a temperature above the melting point of the base polymer is determined especially by the difference in melt temperature between the reactive polymer and the base polymer. The melt temperature of the reactive polymer is therefore preferably higher than that of the base polymer and that of the polyolefin polymer, in particular at least 10°C and preferably at least 20°C higher.

In addition to the above-mentioned three main components the composition according to the invention can optionally contain the commonly used additives for such polymer compositions, for example stabilisers, colorants, processing auxiliaries, release agents, flame-retardant additives and fillers or reinforcing fibre (materials).

The compositions according to the invention can be applied advantageously where for processing into a moulded article and/or the use thereof a combination of dimensional stability at higher temperatures and the specific properties, in particular the flexibility, of the base polymer, are required. Examples thereof are films and sheets, hoses, conveyor belts, bellows and blow-moulded articles.

The invention also relates to a method for preparation of a polymer composition at least comprising as main components:
- a polyolefin polymer grafted with an ethylenically unsaturated functionalised compound with at least a first functional group;
- a reactive thermoplastic polymer with a second functional group which can react with the first; and
- a base polymer comprising at least 55 wt% of a single site catalyst polymerised polyolefin.

Such a method is known from WO 97/12919, where first a reaction product is prepared, for example by reactive extrusion, of the polyolefin polymer with the reactive thermoplastic polymer, with the respective functional groups reacting with each other. Subsequently the resulting reaction product is mixed in the melt with the base polymer.

The known method presents the disadvantage that objects manufactured from the finally obtained composition appear to deform seriously upon exposure to a temperature above the melting point of the polyolefin polymer and to change in terms of appearance in an unfavourable sense.

The aim of the invention is to provide a method with which a composition can be manufactured from the said components and which does not exhibit this disadvantage or exhibits it to a significantly less degree.

This object is attained according to the invention in that the base polymer and the polyolefin polymer, grafted with the ethylenically unsaturated functionalised compound in an amount of between 0.05 and 1.0 mgeq/g, are mixed with each other in the molten state, after which the resulting molten mixture is mixed in the melt with the reactive thermoplastic polymer, the proportion of the base polymer amounting to more than 50, preferably to at least 55 wt% and the proportion of the reactive thermoplastic polymer to at least 10 wt% of the total of the main components and the proportion of the reactive thermoplastic polymer amounts to at least 50 wt% of the total of the reactive thermoplastic polymer and the polyolefin polymer grafted with an ethylenically unsaturated functionalised compound.

Surprisingly, mixing of the three main components in said and in accordance with said specifications appears to yield a composition with a better resistance to exposure to temperatures above the melting point of the base polymer than the known process, which consists of first reacting the grafted polyolefin polymer with the reactive polymer and subsequent combining of the resulting reaction product and the base polymer.

If the melting point of the reactive polymer is higher than that of the other two main components the mixing of the three said main components can be carried out by feeding three main components together to for example an extruder. Due to the difference in melting point between the polyolefin polymer and the base polymer on the one hand and the higher melting point of the reactive polymer on the other hand the two first-mentioned components will melt first and will be mixed in the extruder in the molten state. The reactive polymer is then still in the solid state. Upon further heating of the components in the extruder the reactive polymer will also melt and then mix with the already present mixture to form an end mixture in which all three components have been mixed with each other. During this second mixing phase the reactive polymer reacts with the grafted ethylenically unsaturated polymer. It was found that in the method according to the invention the specific choice of the quantity of functional groups makes the application of catalysts superfluous. In the method according to the invention therefore preferably no catalysts are applied to promote the reaction between the reactive polymer and the grafted polyolefin polymer. The difference in the timing of the melting of the different components can be influenced in a way known to the person skilled in the art by means of the extruder temperature and its course and the forces exerted on the mixture in the extruder, for example shear forces.

In a second embodiment of the method according to the invention first the base polymer and the grafted polyolefin polymer are mixed with each other, for example in an extruder, in the molten state, after which the reactive polymer is mixed in further upstream in the extruder in or in an additional extrusion step.

For the mixing in the melt phase the current techniques and apparatus known to the person skilled in the art can be applied. Particularly suitable for preparation of the composition is for example a co-rotating twin-screw extruder. Preferably the mixing is carried out in the melt in an inert gas atmosphere.

While mixing in the melt takes place, the customary additives and auxiliary agents for polymer compositions, besides the above-mentioned catalysts, can be added, for example stabilisers, colorants, processing auxiliaries, release agents, flame-retardant additives and fillers or reinforcing fibre (materials). Suitable main components that can be applied in the method according to the invention and their proportions are those as described above for the composition according to the invention.

The invention will be elucidated on the basis of the following examples without being restricted thereto.

### Examples I-III and comparative experiment A

The following materials were used:
- Exact® 8201:: ethylene octene copolymer (plastomer) from DEX Plastomers, density 882 kg/m3, MFI = 1 dg/min;
- Exact®-g-MZA (1):: ethylene octene copolymer grafted with 1.5 wt% maleic anhydride;
- Exact®-g-MZA (2):: ethylene octene copolymer grafted with 0.6 wt% maleic anhydride;
- Akulon® K122:: polyamide-6, intrinsic viscosity 2.2 (determined at 25°C in formic acid), from DSM;
- HDPE-g-MZA: ethylene homopolymer with a density of 962 kg/m³, grafted with 1.8 wt% maleic anhydride.

Three solid mixtures were prepared by mixing in the solid state in a tumbler of the quantities of the raw materials stated in Table 1. The resulting solid mixtures were metered with the aid of a K-tron metering unit via the throat to a ZSK 30 mm twin-screw extruder and in this extruder, by melting and mixing with a throughput of 5 kg/hour, a speed of 200 rpm and a temperature profile of 150-260°C, converted into three compositions, I II and III, by the method according to the invention. Composition A was prepared according to the known method by first mixing the reactive polymer Akulon K122 in the melt with the grafted polyolefin polymer and subsequently mixing the resulting reacted mixture in the melt with the base polymer.

**Table 1**

| Composition (wt. %) | I | II *) | III *) | A |
|---|---|---|---|---|
| Exact® 8201 (base polymer) | 75 | 50 | 50 | 50 |
| Exact MZA 1 | 5 | 10 | | |
| Exact MZA 2 | | | | 30 |
| HDPE-g-MZA | | | 10 | |
| Akulon® K122 | 20 | 40 | 40 | 20 |

| | | | | |
|---|---|---|---|---|
| *) not according to the invention | | | | |

### Injection moulding of test specimens

For the production of test specimens in the form of test bars with a length of 70 mm, a width of 10 mm and a thickness of 1 mm the compositions obtained from the extruder, after predrying for 24 hours in a vacuum furnace at 50°C, were injection-moulded with application of an extruder temperature profile of 240°C -275°C, resulting in a temperature of the melt of 250°C ±5°C, a speed of 200 rpm, a thrust of 7,5 mPa and a mould temperature of 50°C.

The test specimens were supported on the topsides of the 20 mm high upright edges of an aluminium U-profile with a spacing of 50 mm. The profile with the supported test specimens was placed in a hot-air furnace which was then brought to a temperature of 150°C and afterwards kept at that temperature. After 30 minutes the test bar made from composition A appeared to have already sagged to the bottom of the U-profile and was partly necked in the width. Its surface showed bumps.

The test bar made from composition I appeared to have sagged a little in the middle, approximately 5 mm, only after 60 minutes. Its width had remained almost equal over the whole length of the rod. Its surface was still virtually smooth.

The test specimens made from compositions II and III hardly showed any sagging or change in width even after 60 minutes. Their surface was still flat and smooth.

## Claims

1. Method for preparation of a polymer composition at least comprising as main components
- a polyolefin polymer grafted with an ethylenically unsaturated functionalised compound with at least a first functional group;
- a reactive thermoplastic polymer with a second functional group which can react with the first; and
- a base polymer, **characterised in that** the base polymer comprises at least 55 wt% of a single site catalyst polymerised polyolefin, and **in that** the base polymer and the polyolefin polymer, grafted with the ethylenically unsaturated functionalised compound in an amount of between 0.05 and 1.0 mgeq/g, are mixed with each other in the molten state, after which the resulting motten mixture is mixed in the melt with the reactive thermoplastic polymer, the proportion of the base polymer amounting to at least 55 wt% and the proportion of the reactive thermoplastic polymer to at least 10 wt% of the total of the main components and the proportion of the reactive thermoplastic polymer amounting to more than 50 wt% of the total of the reactive thermoplastic polymer and the polyolefin polymer grafted with an ethylenically unsaturated functionalised compound.

2. Polymer composition, obtainable according to the method of claim 1, comprising as main components
- a polyolefin polymer grafted with an ethylenically unsaturated functionalised compound with at least a first functional group;
- a reactive thermoplastic polymer with a second functional group which can react with the first: and
- a base polymer comprising at least 55 wt% of a single site catalyst polymerised polyolefin, wherein the proportion of the base polymer amounts to at least 55 wt% and the proportion of the reactive thermoplastic polymer to at least 10 wt% of the total of the main components, and wherein the proportion of the reactive thermoplastic polymer amounts to more than 50 wt% of the total of the reactive thermoplastic polymer and the polyolefin polymer grafted with an ethylenically unsaturated functionalised compound and wherein the quantity of the ethylenically unsaturated functionalised compound in the grafted polyolefin polymer is between 0.05 and 1.0 mgeq/g.

3. Polymer composition according to claim 2. in which the base polymer is polyethylene.

4. Polymer composition according to claim 2 or 3, in which the base polymer is a plastomer.

5. Polymer composition according to any one of claims 1-3, in which the reactive polymer is a polyamide.

## Patentansprüche

1. Verfahren zum Herstellen einer Polymerzusammensetzung, als Hauptkomponenten mindestens umfassend
- ein Polyolefinpolymer, das mit einer ethylenisch ungesättigten funktionalisierten Verbindung mit mindestens einer ersten funktionalen Gruppe gepfropft ist,
- ein reaktives thermoplastisches Polymer mit einer zweiten funktionalen Gruppe, die mit der ersten reagieren kann, und
- ein Basispolymer, **dadurch gekennzeichnet, dass** das Basispolymer mindestens 55 Gew.% eines mit einem Single-Site-Katalysator polymerisierten Polyolefins umfasst, und dass das Basispolymer und das Polyolefinpolymer, das mit der ethylenisch ungesättigten funktionalisierten Verbindung in einer Größenordnung von 0,05 bis 1,0 mgeq/g gepfropft ist, im geschmolzenen Zustand miteinander vermischt werden, wonach die daraus resultierende geschmolzene Mischung in der Schmelze mit dem reaktiven thermoplastischen Polymer gemischt wird, wobei der Anteil des Basispolymers mindestens 55 Gew.% und der Anteil des reaktiven thermoplastischen Polymers mindestens 10 Gew.% des Gesamtgewichts der Hauptkomponenten beträgt und der Anteil des reaktiven thermoplastischen Polymers mehr als 50 Gew.% des Gesamtgewichts aus reaktivem thermoplastischen Polymer und Polyolefin-Polymer, das mit einer ethylenisch ungesättigten funktionalisierten Verbindung gepfropft ist, beträgt.

2. Polymerzusammensetzung, herstellbar nach dem Verfahren aus Anspruch 1, als Hauptkomponenten umfassend
- ein Polyolefinpolymer, das mit einer ethylenisch ungesättigten funktionalisierten Verbindung mit mindestens einer ersten funktionalen Gruppe gepfropft ist,
- ein reaktives thermoplastisches Polymer mit einer zweiten funktionalen Gruppe, die mit der ersten reagieren kann, und
- ein Basispolymer, umfassend mindestens 55 Gew.% eines mit einem Single-Site-Katalysator polymerisierten Polyolefins, wobei der Anteil des Basispolymers mindestens 55 Gew.% und der Anteil des reaktiven thermoplastischen Polymers mindestens 10 Gew.% des Gesamtgewichts der Hauptkomponenten beträgt und der Anteil des reaktiven thermoplastischen Polymers mehr als 50 Gew.% des Gesamtgewichts aus reaktivem thermoplastischen Polymer und Polyolefin-Polymer, das mit einer ethylenisch ungesättigten funktionalisierten Verbindung gepfropft ist, beträgt und wobei die Menge der ethylenisch ungesättigten funktionalisierten Verbindung in dem gepfropften Polyolefin-Polymer zwischen 0,05 und 1,0 mgeq/g beträgt.

3. Polymerzusammensetzung nach Anspruch 2, wobei das Basispolymer Polyethylen ist.

4. Polymerzusammensetzung nach Anspruch 2 oder 3, wobei das Basispolymer ein Plastomer ist.

5. Polymerzusammensetzung nach einem der Ansprüche 1 - 3, wobei das reaktive Polymer ein Polyamid ist.

## Revendications

1. Procédé de préparation d'une composition de polymère comprenant au moins, comme constituants majeurs,
- un polymère polyoléfine greffé avec un composé fonctionnalisé à insaturation éthylénique comportant au moins un premier groupe fonctionnel ;
- un polymère thermoplastique réactif comportant un deuxième groupe fonctionnel qui peut réagir avec le premier ; et
- un polymère de base, **caractérisé en ce que** le polymère de base comprend au moins 55% en poids d'une polyoléfine polymérisée par un catalyseur à un seul site, et **en ce que** le polymère de base et le polymère polyoléfine, greffé avec le composé fonctionnalisé à insaturation éthylénique dans une proportion comprise entre 0,05 et 1,0 méq-g/g, sont mélangés l'un à l'autre à l'état fondu, après quoi le mélange fondu ainsi obtenu est mélangé dans la masse fondue avec le polymère thermoplastique réactif, la proportion du polymère de base se montant à au moins 55% en poids et la proportion du polymère thermoplastique réactif à au moins 10% en poids du total des constituants majeurs, et la proportion du polymère thermoplastique réactif se montant à plus de 50% en poids du total du polymère thermoplastique réactif et du polymère polyoléfine greffé avec un composé fonctionnalisé à insaturation éthylénique.

2. Composition de polymère, pouvant être obtenu par le procédé de la revendication 1, comprenant, comme constituants majeurs,
- un polymère polyoléfine greffé avec un composé fonctionnalisé à insaturation éthylénique comportant au moins un premier groupe fonctionnel ;
- un polymère thermoplastique réactif comportant un deuxième groupe fonctionnel qui peut réagir avec le premier ; et
- un polymère de base comprenant au moins 55% en poids d'une polyoléfine polymérisée par un catalyseur à un seul site, dans laquelle la proportion du polymère de base se monte à au moins 55% en poids et la proportion du polymère thermoplastique réactif à au moins 10% en poids du total des constituants majeurs, et dans laquelle la proportion du polymère thermoplastique réactif se monte à plus de 50% en poids du total du polymère thermoplastique réactif et du polymère polyoléfine greffé avec un composé fonctionnalisé à insaturation éthylénique, et dans laquelle la quantité du composé fonctionnalisé à insaturation éthylénique dans le polymère polyoléfine greffé est comprise entre 0,05 et 1,0 méq-g/g.

3. Composition de polymère selon la revendication 2, dans laquelle le polymère de base est le polyéthylène.

4. Composition de polymère selon la revendication 2 ou 3, dans laquelle le polymère de base est un plastomère.

5. Composition de polymère selon l'une quelconque des revendications 1-3, dans laquelle le polymère réactif est un polyamide.
